# EUROPÄISCHE PATENTSCHRIFT

(11) **EP 2 763 891 B1**
(45) Veröffentlichungstag und Bekanntmachung des Hinweises auf die Patenterteilung: **01.02.2017**
(21) Anmeldenummer: 12751287.9
(22) Anmeldetag: 07.08.2012
(51) Int. Cl.: B62K 19/34, B62K 19/18

(54) **RAHMENELEMENT UND MOTOR FÜR EIN FAHRRAD**
FRAME ELEMENT AND MOTOR FOR A BICYCLE
ÉLÉMENT DE CADRE ET MOTEUR POUR BICYCLETTE

(30) Priorität: 04.10.2011 DE 202011106258 U
(43) Veröffentlichungstag der Anmeldung: 13.08.2014
(73) Patentinhaber: Robert Bosch GmbH, 70442 Stuttgart (DE)
(72) Erfinder: KIMMICH, Peter, 71101 Schoenaich (DE); BRAUN, Sigmund, 72127 Kusterdingen (DE); RAICA, Thomas, 72379 Hechingen (DE); THUSBASS, Alex, 83123 Amerang (DE)
(86) Internationale Anmeldenummer: PCT/EP2012/065427
(87) Internationale Veröffentlichungsnummer: WO 2013/050193

(56) Entgegenhaltungen:
- JP-A- 10 316 075
- JP-A- 2000 062 679
- JP-A- 2000 168 663

## Beschreibung

### Rahmenelement und Motor für ein Fahrrad

Die Erfindung betrifft ein Rahmenelement und einen Motor für ein Fahrrad sowie ein Fahrrad mit einem an das Rahmenelement befestigten Motor.

### Stand der Technik

Für den Antrieb eines motorbetriebenen Fahrrads sind drei unterschiedliche Konzepte denkbar. Während die Unterbringung des Motors für den Vorderrad- bzw. Hinterradantrieb direkt im Rad erfolgen kann, ist das Anbringen des Motors für den Mittelantrieb aufwändiger. Typischerweise wird für diesen Zweck der Rahmen des Fahrrads gegenüber nicht angetriebenen Modellen leicht abgewandelt. Um eine geeignete Befestigungsmöglichkeit für den Motor zu schaffen, werden spezielle Rahmenelement verwendet, die am unteren Ende des V-förmigen Zusammenlaufens von dem mit dem Kopfrohr verbundenen Unterrohr und dem Sattelrohr angebracht sind. Optional kann vorgesehen sein, an das Rahmenelement auch die Hinterradgabel zu befestigen.

Für die Befestigung des Motors unterhalb des Rahmens gibt es je nach Rahmenhersteller unterschiedliche Ansätze. In den ersten Elektrofahrrädern mit Mittelmotorantrieb war der Motor direkt unterhalb des Rahmenelements angeordnet, welches das Unterrohr und das Sattelrohr verbunden hat. Bei einer derartigen Anordnung des Motors wird zwangsläufig die Bodenfreiheit reduziert, so dass gerade bei Geländefahrrädern wie den Mountain- oder Crossbikes Einbußen im Fahrkomfort vorkommen konnten. Eine erste Lösung bestand darin, den Motor oberhalb des Rahmenelements anzuordnen. Durch diese Anordnung des Motors wird jedoch auch der Platz im Rahmendreieck verringert, der üblicherweise für die Akku- bzw. Batteriepack genutzt wird. Gerade bei Fahrrädern, die keinen Gepäckträger haben, auf oder unter dem der Akku- bzw. Batteriepack ebenfalls positioniert werden kann, erzeugt diese Anordnung neue Probleme.

Aus der Schrift JP 10230890 A ist bereits eine Aufnahme für einen Elektromotor eines Tiefeinsteiger bekannt. Diese Aufnahme ist U-förmig ausgestaltet, so dass der Motor direkt in die Aufnahme eingeschoben werden kann und die Seitenwände den Motor umfassen können. Diese Konstruktion hat jedoch den Nachteil, dass der Fahrer beim Treten der Tretkurbeln Wirkkräfte erzeugt, die den ganzen Rahmen instabil werden lässt, da die Kräfte sich auf die Aufnahme und somit die Verbindung mit den verbundenen Rohren Der nächstliegende bekanntgewordene Stand der Technik ist dem Dokument JP10316075 zu entnehmen.

Mit der vorliegenden Erfindung wird durch eine Kombination von geändertem Rahmenelement und verbessertem Motoraufbau eine Möglichkeit vorgeschlagen, den Motor sicher und stabil am Fahrrad zu befestigen und gleichzeitig die Bodenfreiheit zu erhöhen.

### Offenbarung der Erfindung

Mit der vorliegenden Erfindung wird ein Rahmenelement für ein Fahrrad, ein Motor für den Antrieb eines Fahrrads sowie ein Fahrrad mit einem entsprechenden Rahmenelement und einem daran befestigten Motor Diese Aufgabe wurde erfindungsgemäß durch die im kennzeichnenden Teil des Anspruches 1 genannten technischen Mittel gelöst.

Vorteilhafte Ausgestaltungen und weitere Ausführungsformen der Erfindung sind durch die abhängigen Ansprüche gegeben.

Das Rahmenelement ist dabei als eigenständiges Bauelement oder als integriertes Teil im unteren Bereich des Fahrradrahmens vorgesehen. Typischerweise dient das Rahmenelement als Stabilisierungselement, indem es die Verbindung zwischen dem Unterrohr und dem Sattelrohr herstellt. Es ist jedoch auch möglich, dass beide Rohre auf dem Rahmenelement miteinander verbunden sind. Die Rohre werden einzeln oder gemeinsam mit einer plattenförmigen Komponenten des Rahmenelements verbunden, die stellenweise gebogen ist. Der Kern der Erfindung besteht nun darin, dass das Rahmenelement auf der plattenförmig, gebogenen Komponenten einen Kamm bzw. einen Grat aufweist, der im Wesentlichen über die gesamte Länge der Komponenten verläuft. Dabei ist der Grat mittig auf der plattenförmigen Komponenten positioniert.

Mit dieser Ausgestaltung des Rahmenelements wird ein Aufnahmesystem für einen Motor geschaffen, der im Vergleich zu bekannten Rahmenelementen eine höhere Stabilisierung in Verbindung mit einer einfacheren Montage ermöglicht. Konkret wird die Befestigung des Motors konstruktiv von der stabilisierenden Wirkung des Rahmenelements bzw. der plattenförmigen Komponenten auf das Gefüge des Fahrradrahmens getrennt. Weiterhin stellt die Ausgestaltung eines mittig angeordneten Kamms für die Befestigung des Motors eine stabilere Konstruktion gegenüber einer schalenartigen Aufnahme dar. Diese mittige Anordnung hat auch hinsichtlich der auf das Konstrukt wirkenden Kräfte Vorteile gegenüber einer nur einseitigen Befestigung. Da die Kräfte auf einer größeren Fläche verteilt sind und somit die Belastung reduziert wird.

In einer Ausgestaltung der Erfindung ist vorgesehen, dass der Kamm bzw. der Grat nach unten, d.h. in Richtung der Fahrbahn ausgerichtet ist. Dabei ist die plattenförmige Komponenten ausgehend von einem im Wesentlichen parallel zur Fahrbahn verlaufenden langen ersten Teilbereich mit einem kurzen zweiten Teilbereich L-förmig nach unten gebogen. Somit kann der Motor einfach von unten an das Rahmenelement befestigt werden. Alternativ kann auch vorgesehen sein, den Kamm bzw. den Grat auf der plattenförmigen Komponenten nach oben auszurichten. Hierbei ist der zweite Teilbereich der plattenförmige Komponenten ebenfalls L-förmig gebogen, jedoch nach oben. Der Motor kann in dieser Alternative von oben eingesetzt werden. Bei beiden Alternativen besteht die Möglichkeit den zweiten Teilbereich in Fahrtrichtung des Fahrrads vorne oder hinten an den ersten Teilbereich der plattenförmigen Komponenten zu verbiegen.

Optional kann jedoch das Rahmenelement mit der gebogenen plattenförmigen Komponenten auch in jeder anderer Position unterhalb des Fahrradrahmens angebracht sein. Denkbar sind hierbei z.B. schräge Anordnungen. Die plattenförmige Komponenten ist in diesen Fällen nicht mehr zwangsläufig parallel zur Fahrbahn.

In der Ausgestaltung der Erfindung ist die L-förmige Verbiegung der plattenförmigen Komponenten derart vorgesehen, dass der erste und zweite Teilbereich einen Winkel von 65° bis 115° einschließen. Besonders vorteilhaft ist eine Verbiegung um 105° vorgesehen, um den Einbau zu erleichtern. Darüber hinaus hilft die Verbiegung auch, um als Anschlag für den Motor im Betrieb zu dienen, beispielsweise bei Off-Road Fahrten oder unbeabsichtigten Stößen gegen den Motor. Somit wird eine Beschädigung des Motors verhindert.

Die Abmessungen des Rahmenelements als Ganzem oder auch der plattenförmigen Komponenten bzw. des Kamms als Einzelelement sollte derart gestaltet sein, dass der erste und der zweite Teilbereich ein (Längen-)Verhältnis von 1:2 bis 1:2,5 aufweisen. Ein derartiges Verhältnis ermöglicht es, eine ausgeglichene Balance zwischen Tragkraft des ersten Teilbereichs und Unterstützung durch den zweiten Teilbereich zu erreichen.

In einer weiteren Ausgestaltung ist gegenüber der L-förmigen Verbiegung eine weitere Biegung des Rahmenelements vorgesehen. Diese kann sowohl in der plattenförmigen Komponenten als auch im Kamm bzw. im Grat vorliegen. Sie dient dazu, den Motor gegen ein Rutschen zu sichern, ähnlich wie der Anschlag durch die L-förmige Verbiegung. Diese weitere Biegung ist jedoch nicht zwangsläufig so stark ausgebildet, wie die L-förmige Verbiegung, sowohl was den Biegewinkel angeht noch die Ausdehnung. Als Biegewinkel haben sich Winkel von 150° bis 170° als günstig erwiesen, wobei insbesondere ein Winkel von 160° als angemessen erkannt worden ist, um eine ausreichende Stabilität zu erreichen. Hinsichtlich der räumlichen Ausdehnung ist in einer Ausführung der Erfindung lediglich eine kleine Erhebung notwendig.

Die Ausgestaltung des Kamms auf der plattenförmigen Komponenten sollte derart erfolgen, dass die Dicke der Komponenten und des Kamms etwa im Verhältnis 1:4 bis 1:5 liegt, so dass der Kamm deutlich über die plattenförmige Komponente hinausragt. Als besonderes Verhältnis, bei dem sich die Stabilität hinsichtlich des Gewichts als vorteilhaft erwiesen hat, hat sich ein Verhältnis von 1:4,4 herausgestellt.

Hinsichtlich des Breitenverhältnisses des Kamms zur darunter liegenden Komponenten hat sich ein Verhältnis von 1:6 bis 1:9, vorteilhafterweise 1:7 erwiesen.

Zur Arretierung des eingesetzten Motors sind in dem Kamm wenigstens zwei Löcher, Öffnungen und/oder Gewinde vorgesehen. Dabei ist wenigstens eines der Löcher, Öffnungen und/oder Gewinde im ersten und eines im zweiten Teilbereich des Kamms vorgesehen. Vorzugsweise sind jedoch im längeren ersten Teilbereich mehr Löcher, Öffnungen und/oder Gewinde vorgesehen, als im zweiten Teilbereich.

Um zu verhindern, dass die elektrischen Zuführungen an den Motor von außen zugänglich und somit beschädigbar sind, ist vorgesehen, in dem Rahmenelement eine Öffnung vorzusehen, durch die Kabel oder sonstige Zuleitungen geführt werden können. Dies wird beispielsweise dadurch erreicht, dass in der plattenförmigen Komponenten und dem darauf befindlichen Kamm eine durchgehende Öffnung vorgesehen ist. Vorteilhafterweise ist diese Öffnung zwischen der Befestigung des Unterrohrs und des Sattelrohrs an der Komponenten vorgesehen.

In einer weiteren Ausgestaltung kann das Rahmenelement ebenfalls mit der Hinterradgabel und/oder dem Schutzblech des Hinterrads verbunden sein. Diese Verbindung kann vorzugsweise über den gebogenen zweiten Teilbereich der Komponenten erfolgen.

Die Verbindung der Hinterradgabel mit dem Rahmenelement bzw. der plattenförmigen Komponenten kann sowohl starr als auch flexibel bzw. drehbar oder schwenkbar gelagert ausgestaltet sein. So ist denkbar, dass der zweite Teilbereich des Rahmenelements, insbesondere der Komponenten, ein Schwenklager aufweist, an dem die Hinterradgabel schwenkbar gelagert ist.

Der Motor, der für die Befestigung an einem Fahrrad mit dem erfindungsgemäßen Rahmenelement vorgesehen ist, weist eine in einem Motorgehäuse integrierte Motoreinheit und eine Antriebswelle auf, die nebeneinander angeordnet sind und im wesentlichen die Länge des Motors definieren. Die Antriebswelle ich dabei derart ausgestaltet, dass auf ihr wenigstens ein Kettenblatt angeordnet ist, mit dem ein Antriebsmoment ausgeübt werden kann. Erfindungsgemäß ist auf der Oberseite und der seitlichen Flanke des Motorgehäuses eine innen liegende Vertiefung die zur Aufnahme eines Halteelements vorgesehen. Diese Vertiefung ist in einer Ausgestaltung derart geformt, dass sie passgenau mit dem Kamm bzw. Grat des Rahmenelements übereinstimmt, so dass wenn überhaupt nur ein geringes Spiel vorhanden ist. Vor diesem Hintergrund ist die Vertiefung entlang der gesamten Oberseite des Motors und einem Großteil der seitlichen Flanke vorgesehen.

In den Rändern der Vertiefung sind Löcher bzw. Öffnungen vorgesehen, die zur Befestigung und Arretierung des Motors an dem Rahmenelement dienen. Diese Löcher können dabei einseitig in einer der Wände aber auch durch beide Wände hindurchgehend vorgesehen sein. Zur Befestigung ist dabei vorgesehen, dass im oberen, längeren Teil der Vertiefung wenigstens ein Loch bzw. Öffnung, vorzugsweise jedoch wenigstens zwei Löcher bzw. Öffnungen vorgesehen sind, wobei in der kürzeren, seitlichen Vertiefung nur wenigstens ein Loch bzw. eine Öffnung vorgesehen ist. Alternativ kann eine der beiden Wände auch statt den Löchern Gewinde aufweisen.

In einer weiteren Ausführungsform kann auch vorgesehen sein, den Motor über Löcher in der plattenförmigen Komponenten den Rahmenelements zu befestigen. Hierzu müssen an den entsprechenden Stellen im Motor Gewindelöcher vorgesehen sein.

Prinzipiell ist vorgesehen, dass die Achse, bestehend aus Motoreinheit und Antriebswelle und eine Achse, die sich aus dem ungebogenen langen ersten Teilbereich der Komponenten ableiten lässt wenigstens annähernd parallel verlaufen oder zumindest einen spitzen Winkel einschließen. Alternativ kann jedoch auch vorgesehen sein, dass die beiden Achsen nahezu senkrecht aufeinander stehen.

Weitere Vorteile ergeben sich aus der nachfolgenden Beschreibung von Ausführungsbeispielen bzw. aus den abhängigen Patentansprüchen.

### Kurze Beschreibung der Zeichnungen

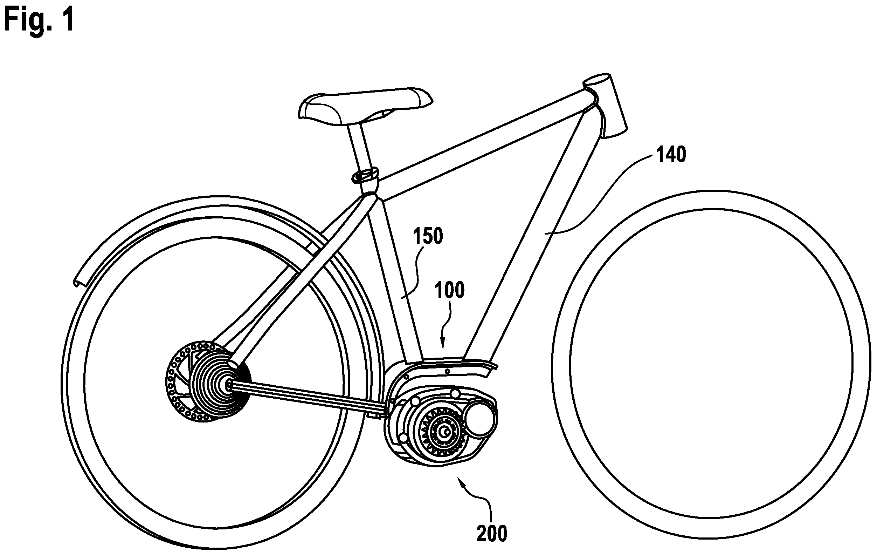

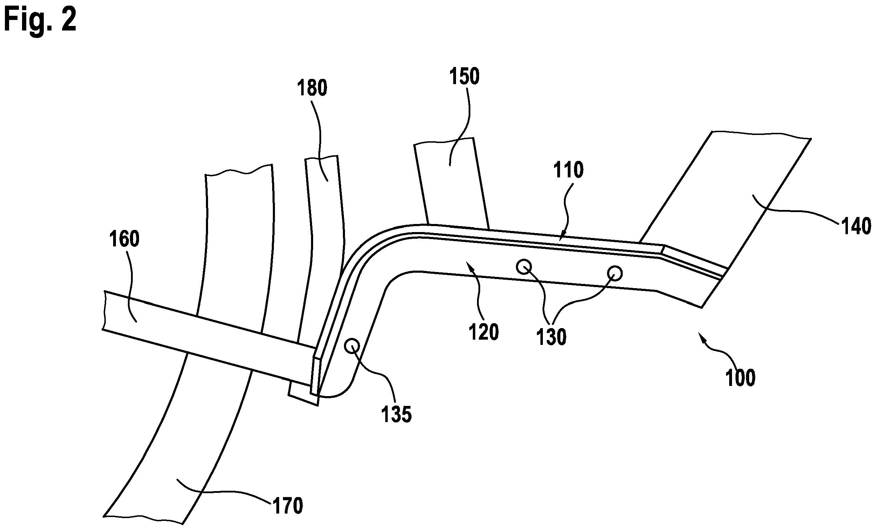

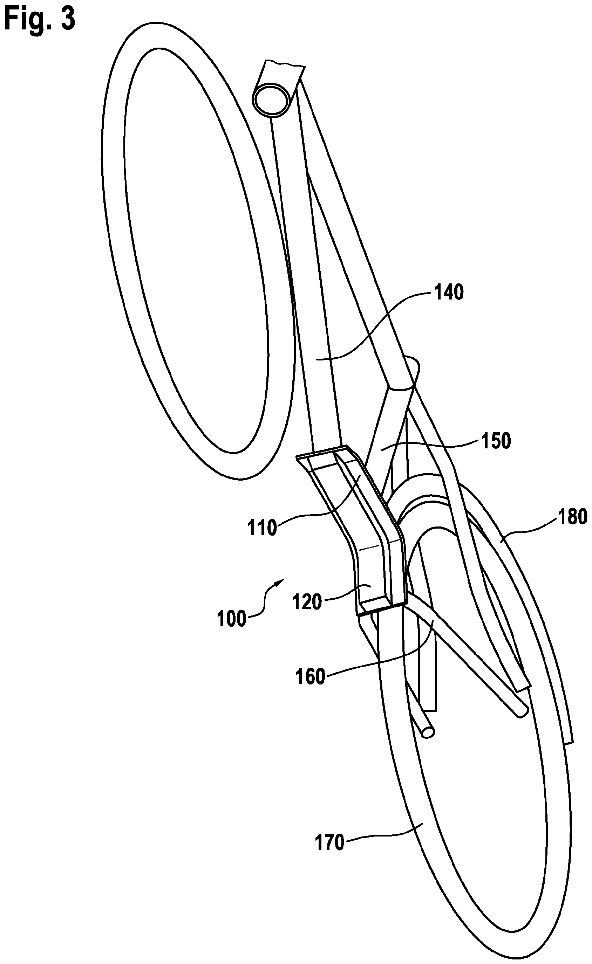

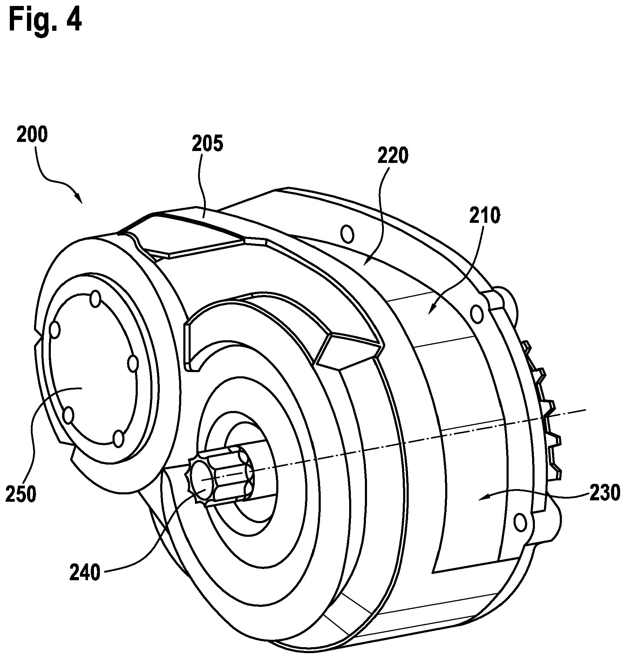

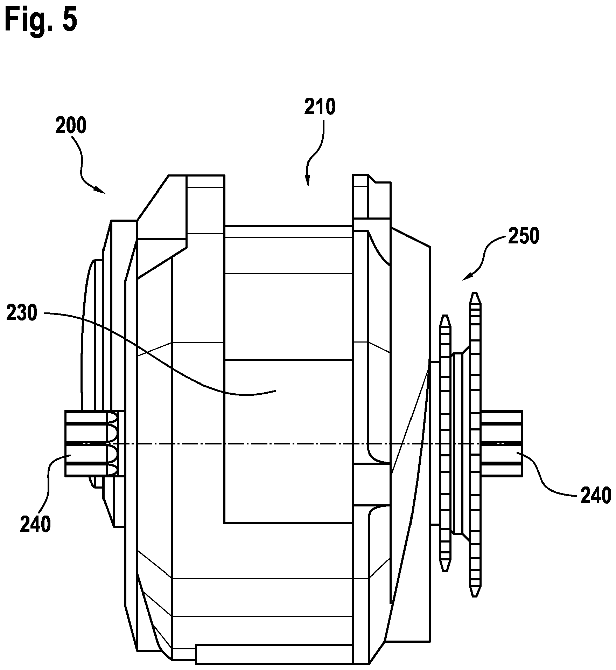

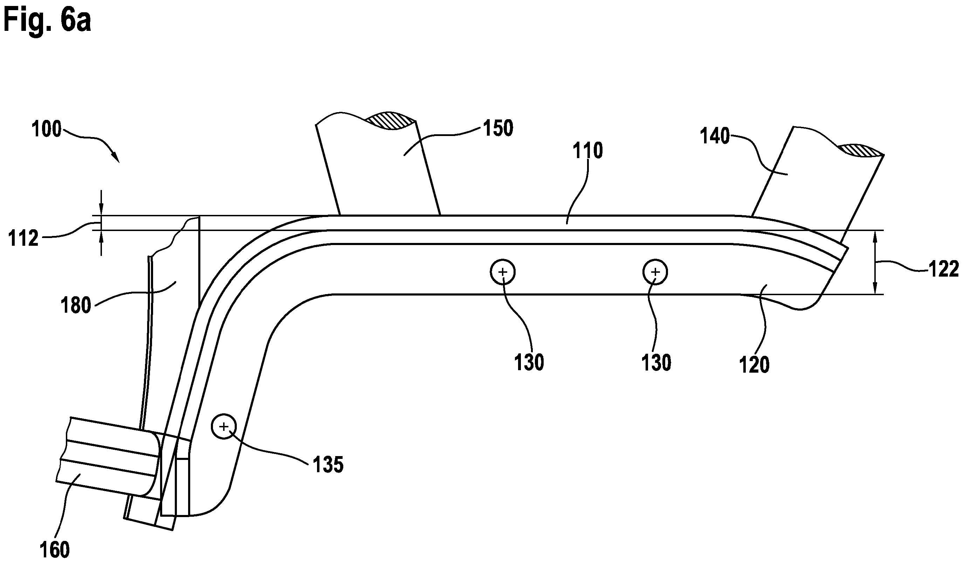

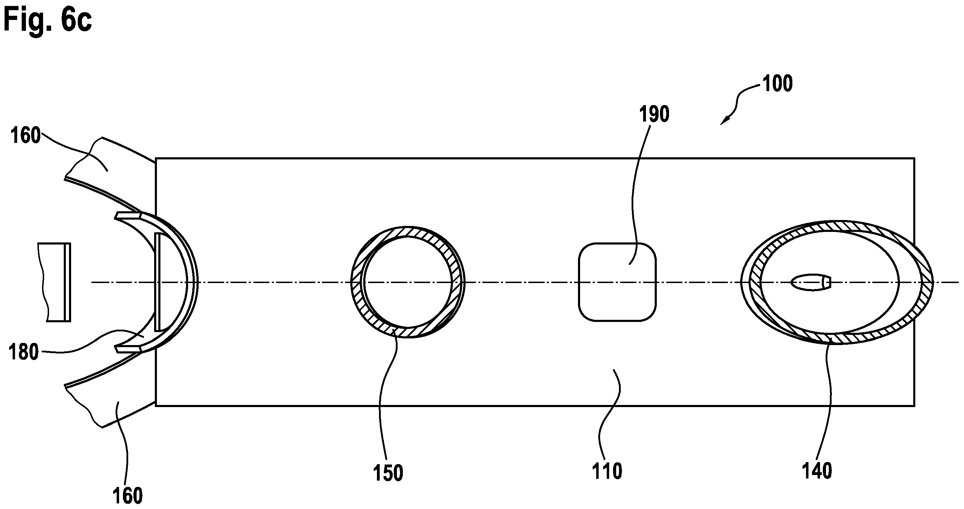

Figur 1 zeigt schematisch ein erfindungsgemäßes Fahrrad mit einem Rahmenelement und einem Motor. In der Figur 2 ist eine seitliche Detaildarstellung des Rahmenelements zu sehen, während die Figur 3 eine gekippte Darstellung zeigt. Die Figuren 4 und 5 bilden zwei Ansichten des Motors bzw. des Motorgehäuses ab. In den Figuren 6a bis c werden verschiedene Seitenansichten des Rahmenelements gezeigt.

### Ausführungsformen der Erfindung

Ein erstes mögliches Ausführungsbeispiel der Erfindung wird in der Figur 1 dargestellt. Dabei wird ein Rahmenelement 100 derart am unteren Teil eines Fahrradrahmens befestigt, dass es als Bindeglied für eine (starre) Verbindung des Unterohrs 140, der zum Kopfrohr und somit zum Lenker führt, und des Sattelrohrs 150, auf dem der Sattel befestigt ist, dient. Wie aus der Figur 1 zu ersehen ist, kann in diesem vorliegenden Beispiel der Motor einfach von unten an dem Rahmenelement befestigt werden.

Eine detailliertere Darstellung des Rahmenelements 100 ist in der Figur 2 abgebildet. Deutlich ist zu erkennen, dass das insbesondere L-förmige Rahmenelement 100 aus einer gebogenen Komponente 110 besteht sowie einem Bereich 120, der sich in der Figur 3 als Kamm 120 bzw. Grat identifizieren lässt. Weiterhin ist in der Figur 3 zu erkennen, dass die erste Komponente 110 eine plattenförmige Form aufweist. Sowohl die erste Komponenten 110 als auch der Kamm 120 sind L-förmig verbogen. Dabei weist das Rahmenelement einen langen ersten Teilbereich und einen kurzen zweiten Teilbereich auf.

Analog zur Figur 1 ist das Rahmenelement 100 mit seiner nach oben, zum Fahrer, gerichteten plattenförmig, gebogenen Komponenten 110 und dem nach unten, zur Fahrbahn hin, gerichteten Kamm 120 über die Komponenten 110 mit dem übrigen Fahrradrahmen verbunden. Im abgebildeten Ausführungsbeispiel ist das L-förmige Rahmenelement bzw. die gebogene Komponenten 110 auf seiner langen Seite mit dem Kopfrohr 140 und davon beabstandet mit dem Sattelrohr 150 verbunden. Alternativ kann auch vorgesehen sein, dass das Kopfrohr und das Sattelrohr eine gemeinsame Verbindung mit dem Rahmenelement bzw. der Komponenten 110 aufweist. Weiterhin ist optional auch die Befestigung der Hinterradgaben 160 und/oder des Schutzbleches 180 des Hinterrads 170 an dem kürzeren zweiten Teilbereich des Rahmenelements 100 bzw. der Komponenten 110 möglich. Die bevorzugt in starrer Verbindung ausgestaltete Befestigung der Rohre an dem Rahmenelement kann sowohl mittels einer Verschweißung, einer Vernietung, einer Verklebung und/oder einer Verschraubung erfolgen.

In einem weiteren Ausführungsbeispiel kann vorgesehen sein, die Befestigung der Hinterradgabel 160 an dem Rahmenelement 100 bzw. der Komponenten 110 beweglich auszugestalten (nicht dargestellt). So kann an dem kürzeren zweiten Teilbereich der Komponenten 110 eine Lagerung vorgesehen sein, in der die Hinterradgabel 160 dreh oder schwenkbar gelagert ist.

Zur Befestigung des Motors 200 an dem Rahmenelement 100 sind Löcher, Öffnungen und/oder Gewindebohrungen 130 bzw. 135 vorgesehen, mit denen der Motor im Rahmenelement arretiert werden kann. Wie aus der Figur 2 ersichtlich, ist zur besseren Stabilisierung der Befestigung vorgesehen, auf dem langen ersten Teilbereich des Kamms 120 wenigstens zwei Löcher 130 und auf dem kurzen zweiten Teilbereich wenigstens ein Loch 135 vorzusehen. Die Anordnung der Löcher entspricht neben der Tragkraft, die im Wesentlichen senkrecht kompensiert wird, der zu erwartenden seitlichen (Wirk-) Kräfte im Betrieb des Fahrrads.

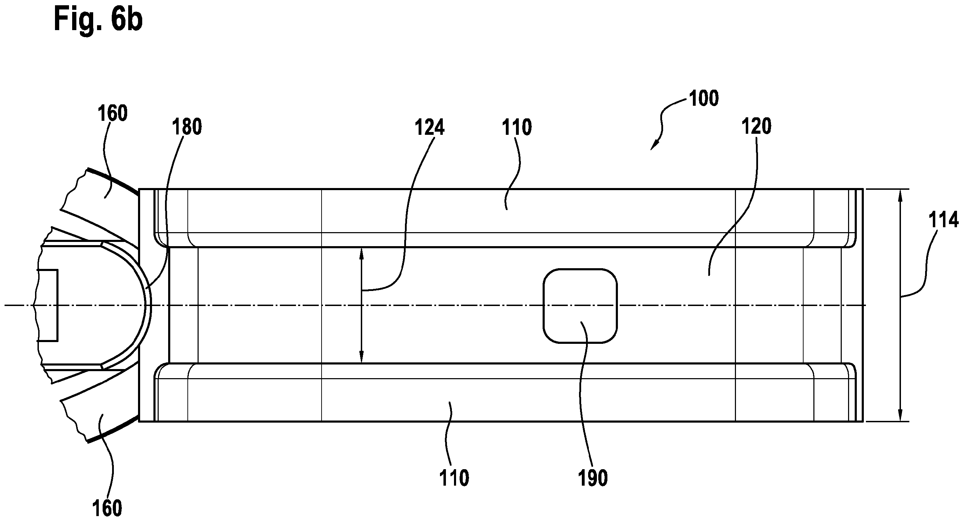

In der Detailansicht der Figur 3 (siehe auch die Figur 6b) ist weiterhin ersichtlich, dass der Kamm 120 eine nicht zu vernachlässigende Breite 124 im Vergleich zu der Breite 114 der Komponenten 110 aufweist. Durch diese breite Ausgestaltung des Kamms 110 wird eine stabile Befestigung des Motors 200 an dem Rahmenelement 200 ermöglicht. Weiterhin dient der gebogene Teil des Rahmenelements (zweiter Teilbereich) als Anschlag sowohl für den Einbau des Motors als auch im Betrieb des Fahrrad bei Off-Road Fahrten oder unbeabsichtigten Stößen gegen den Motor.

In den Figuren 4 und 5 sind Seitenansichten des Motors 200 dargestellt, der zum Einbau in das Rahmenelement 100 vorgesehen ist. Der Motor 200 besteht aus einer Motoreinheit 250, einer Antriebswelle 240 in einem Motorgehäuse 205. Die Antriebswelle 240 ist mit wenigstens einem Kettenblatt 260 verbunden, auf den ein Antriebsmoment ausgeübt werden kann, so dass die Antriebswelle 240 mit Tretkurbeln als gewöhnliche Tretachse eines Fahrrads verwendet werden kann. Auf der Oberseite und einem Teil der seitlichen Flanke des Motorgehäuses 205 ist eine Vertiefung 210 vorgesehen, die hinsichtlich der Abmessungen mit denen des Kamms 120 des Rahmenelements 100 weitestgehend übereinstimmt, um ein Spiel möglichst zu vermeiden.

Wie anhand der Form des Rahmenelements 100 und insbesondere des gebogenen Teils ersichtlich ist, ist die Vertiefung 230 auf der seitlichen Flanke des Motors 200 nur teilweise vorgesehen. Dies liegt daran, dass dieser Teil des Rahmenelements im Wesentlichen zur Positionierung des Motors beim Einbau als auch als Anschlag dient. Dagegen dient die Vertiefung 220, die sich auf der Oberseite des Motorgehäuses 205 über die gesamte Länge des Motors 200 ausbreitet sowohl zur Halterung des Motors 200 am Rahmenelement 100 als auch zur Aufnahme von Quer- bzw. Wirkkräften, die sich bei der Betätigung der Tretkurbeln beim Fahren des Fahrrads ergeben.

Zur Befestigung des Motors an dem Rahmenelement sind in den Wänden der Vertiefung 210 Löcher, Öffnungen und/oder Gewinde vorgesehen. Diese können sowohl einseitig in einer Wand aber auch durchgehend durch beide Wände vorgesehen sein. Alternativ oder auch optional kann ebenfalls vorgesehen sein, dass die Befestigung über Schrauben erfolgt, die durch die seitlichen Bereiche der plattenförmigen Komponenten 110 von oben in den Motor eingeschraubt werden (nicht gezeigt).

In einer weiteren Ausgestaltung des Rahmenelements ist die Motoreinheit 250 und die Antriebswelle 240 derart nebeneinander im Motorgehäuse 205 angeordnet, dass eine durch beide Einheiten gedachte Achse parallel bzw. nahezu parallel zur Vertiefung 220 auf der Oberseite des Motorgehäuses 205 verläuft. Dadurch wird erreicht, dass die Motoreinheit 250 und die danebenliegende Antriebswelle 240 des Motors 200 bei der Montage an das Rahmenelement 100 ebenfalls parallel oder nahezu parallel zum langen ersten Teilbereich des Rahmenelements ausgerichtet ist. Alternativ kann auch vorgesehen sein, dass bei der Montage die Achse durch die Antriebswelle 240 und die Motoreinheit 250 sowie die Achse, die durch den ersten Teilbereich des Rahmenelements 100 definiert wird, einen spitzen Winkel einschließt.

In den Figuren 6a bis c sind weitere Details zum Rahmenelement 100 dargestellt. Deutlich erkennbar ist in Figur 6a, dass ein langer erster Teilbereich und ein gebogener kurzer zweiter Teilbereich des L-förmigen Rahmenelements 100 vorgesehen ist. Die Verbiegung dieser zwei Teilbereiche weist üblicherweise einen Winkel zwischen 65° und 115° auf, wobei sich ein Winkel von 105° als besonders geeignet zum Einbau des Motors und zur Abstützung herausgestellt hat. Auf der anderen Seite des langen ersten Teilbereichs ist eine optionale weitere Biegung zu erkennen. Da diese Biegung im wesentlichen zur korrekten Positionierung des Motors während des Einbaus verwendet wird, ist hier eine Biegung von 150° bis 170°, vorzugsweise 160° vorgesehen.

Hinsichtlich der Dicke der einzelnen Elemente des Rahmenelements 100 lässt sich feststellen, dass die Dicke 112 der plattenförmigen Komponenten

Wie aus der Figur 6a zu entnehmen ist, weist die Dicke 122 des Kamms 120 gegenüber der Dicke 112 der plattenförmigen Komponenten 110 ein Verhältnis von 4:1 bzw. 5:1 auf, wobei sich hinsichtlich der Stabilität vs. des Gewicht der Anordnung ein bevorzugtes Verhältnis von 4,4:1 eignet.

Das Breitenverhältnis des mittig stehenden Kamms 120 auf der plattenförmigen Komponenten 110 zeigt die Figur 6b. So weist die Breite 124 des Kamms 120 und die Breite 114 der Komponenten 110 ein Verhältnis von 1:1,6 bis 1:1,9, vorzugsweise 1:1,7, auf.

Zur Führungen der elektrischen Zuleitungen vom Motor zum Akku- bzw. Batteriepack und/oder zum Steuergerät ist im Rahmenelement eine Öffnung 190 vorgesehen. Diese Öffnung 190 führt sowohl durch die plattenförmige Komponente 110 als auch durch den Kamm 120 in das Gehäuse 205 des Motors 200. Somit wird eine außen liegende Führung der Leitungen vermieden, um unbeabsichtigte Leitungsschäden bei der Benutzung des Fahrrads zu vermeiden.

Die Öffnung 190 ist vorteilhafterweise mittig im ersten Teilbereich des Rahmenelements 100 zwischen der Verbindung mit dem Unterrohr 140 und dem Sattelrohr 150 angeordnet. Optional kann jedoch auch vorgesehen sein, die Anordnung dieser Öffnung aus der geometrischen Mitte heraus zu verlegen.

In einer weiteren Ausführungsform kann der Kamm 120 auch aus zwei parallelen Platten besteht, die ggf. mittels Stegen miteinander verbunden sind.

Als Material für das Rahmenelement sind neben Stahl, Aluminium auch Keramiken oder Kunststoffe denkbar.

## Patentansprüche

1. Rahmenelement für ein Fahrrad, insbesondere für die Befestigung eines Antriebsmotors für das Fahrrad, wobei das Rahmenelement (100)
- im unteren Bereich des Fahrradrahmens angebracht ist und
- mit einem Unterrohr (140) und einem Sattelrohr (150) verbunden ist und
- eine plattenförmige, gebogene Komponente (110) aufweist, die die Verbindung mit dem Unterrohr (140) und dem Sattelrohr (150) herstellt, wobei das Rahmenelement auf der plattenförmig, gebogenen Komponenten (110) einen im Wesentlichen über die gesamte Länge der Komponenten (110) laufenden, mittig über die Komponente (110) hervorstehenden Kamm (120) aufweist,
**dadurch gekennzeichnet, dass**
der Kamm (120) einen langen ersten Teilbereich und einen kurzen zweiten Teilbereich aufweist, wobei der erste und der zweite Teilbereich um einen Winkel von 65° bis 115°, insbesondere 105° zueinander abgewinkelt sind,
wobei der Kamm (120) wenigstens zwei seitliche Löcher, Öffnungen und/oder Gewinde (130, 135) zur Befestigung des Motors aufweist, wobei wenigstens ein Loch, eine Öffnung und/oder ein Gewinde (130) im langen ersten und ein Loch , eine Öffnung und/oder ein Gewinde (135) im kurzen zweiten Teilbereich des Kamms vorgesehen ist.

2. Rahmenelement nach Anspruch 1, **dadurch gekennzeichnet dass** das Rahmenelement (100) derart im unteren Bereich des Fahrradrahmens angeordnet ist, dass die Komponente (110) des Rahmenelements im Wesentlichen nach oben und der Kamm (120) im Wesentlichen nach unten, insbesondere in Richtung der Fahrbahn ausgerichtet ist.

3. Rahmenelement nach Anspruch 1, **dadurch gekennzeichnet dass** das Rahmenelement derart im unteren Bereich des Fahrradrahmens angeordnet ist, dass die Komponente (110) des Rahmenelements nach unten, insbesondere in Richtung der Fahrbahn und der Kamm (120) nach oben, insbesondere zwischen dem Unterrohr (140) und dem Sattelrohr (150) ausgerichtet ist.

4. Rahmenelement nach einem der vorhergehenden Ansprüche, **dadurch gekennzeichnet dass** die Komponente (110) einen langen ersten Teilbereich und einen kurzen zweiten Teilbereich aufweist, wobei der erste und der zweite Teilbereich um einen Winkel von 65° bis 115°, insbesondere 105° zueinander abgewinkelt sind.

5. Rahmenelement nach Anspruch 1 oder 4, **dadurch gekennzeichnet dass** der erste und der zweite Teilbereich ein Verhältnis von 1:2 bis 1:2,5, insbesondere 1:2,4 aufweisen.

6. Rahmenelement nach einem der vorhergehenden Ansprüche 1, 4 oder 5, **dadurch gekennzeichnet dass** das Rahmenelement, insbesondere die Komponente (110) und/oder der Kamm (120), an dem Ende, der dem ersten Teilbereich gegenüber liegt, eine zusätzliche Biegung aufweist, wobei insbesondere vorgesehen ist, dass diese Biegung einen Winkel von 150° bis 170°, insbesondere 160° aufweist.

7. Rahmenelement nach einem der vorhergehenden Ansprüche, **dadurch gekennzeichnet dass** die Dicke (112) der Komponenten und die Dicke (122) des Kamms ein Verhältnis von 1:4 bis 1:5, insbesondere 1:4,4 aufweisen.

8. Rahmenelement nach einem der vorhergehenden Ansprüche, **dadurch gekennzeichnet dass** die Breite (124) des Kamms und die Breite (114) der Komponenten ein Verhältnis 1:1,6 bis 1:1,9, vorzugsweise 1:1,7, aufweist.

9. Rahmenelement nach einem der vorhergehenden Ansprüche, **dadurch gekennzeichnet dass** das Rahmenelement eine durch den Kamm (120) und die Komponente (110) durchgehende Öffnung (190) aufweist, wobei diese Öffnung vorzugsweise zwischen der Verbindung der Komponenten mit dem Unterrohr und dem Sattelrohr vorgesehen ist.

10. Rahmenelement nach einem der vorhergehenden Ansprüche, **dadurch gekennzeichnet dass** das Rahmenelement mit der Hinterradgabel (160) verbunden ist, wobei insbesondere vorgesehen ist, dass die Verbindung über den zweiten Teilbereich der Komponenten erfolgt.

11. Rahmenelement nach einem der vorhergehenden Ansprüche, **dadurch gekennzeichnet dass** das Rahmenelement eine Lagerstelle zur Lagerung der Hinterradgabel des Fahrrads aufweist, wobei insbesondere vorgesehen ist, dass die Lagerstelle als Schwenklager ausgebildet ist und dass die Hinterradgabel schwenkbar an dem Rahmenelement gelagert ist.

12. Rahmenelement nach einem der vorhergehenden Ansprüche, **dadurch gekennzeichnet dass** das Rahmenelement (100) eine Halterung für das Schutzblech (180) des Hinterrads aufweist, wobei insbesondere vorgesehen ist, dass das Schutzblech mit dem gebogenen kurzen Bereich der Komponenten verbunden ist.

13. Motor (200) zum Antrieb eines Fahrrads, zum Einbau in ein Rahmenelement nach einem der Ansprüche 1 bis 12, mit einer in einem Motorgehäuse (205) integrierten Motoreinheit (250) und einer Antriebswelle (240), die nebeneinander angeordnet sind, wobei die Antriebswelle derart ausgestaltet ist, dass sie auf ein Kettenblatt (260) ein Antriebsmoment ausüben kann,
**dadurch gekennzeichnet dass**
das Motorgehäuse (205) eine Vertiefung (210, 220, 230) zur Aufnahme eines Halteelements aufweist, die im Wesentlichen entlang der gesamten Länge in der oberen Seite und entlang eines Großteils der seitlichen Flanke entlang läuft, und
die hinsichtlich der Abmessungen mit denen des Kamms (120) des Rahmenelements (100) weitestgehend übereinstimmt.

14. Motor (200) nach Anspruch 13, **dadurch gekennzeichnet dass** das Motorgehäuse (205) am Rand der oberen Vertiefung (220) wenigstens ein Loch und am Rand der seitlichen Vertiefung (230) ebenfalls wenigstens ein Loch zur Befestigung des Halteelements aufweist.

15. Fahrrad mit motorunterstütztem Antrieb, **dadurch gekennzeichnet dass** das Fahrrad einen Motor nach einem der Ansprüche 13 oder 14 und ein Rahmenelement nach einem der Ansprüche 1 bis 12 aufweist, wobei die Befestigung des Motors am Rahmenelement über einen Einsatz des Kamms in die Vertiefung des Motors erfolgt, wobei die Arretierung des Motors über Löcher, Öffnungen und/oder Gewinde (130, 135) im Kamm (120) vorgesehen ist.

16. Fahrrad mit motorunterstütztem Antrieb nach Anspruch 15, **dadurch gekennzeichnet dass** der Motor oberhalb des Rahmenelements angeordnet ist.

## Claims

1. Frame element for a bicycle, in particular for fastening a drive motor for the bicycle, wherein the frame element (100)
- is attached in the lower region of the bicycle frame, and
- is connected to a down-tube (140) and to a seat tube (150), and
- has a plate-like, curved component (110) which produces the connection to the down-tube (140) and to the seat tube (150),
wherein the frame element has, on the plate-like, curved components (110), a ridge (120) which runs substantially over the entire length of the components (110) and protrudes centrally over the component (110),
**characterized in that**
the ridge (120) has a long first partial region and a short second partial region, wherein the first and the second partial regions are bent by an angle of 65° to 115°, in particular 105°, with respect to each other, wherein the ridge (120) has at least two lateral holes, openings and/or threads (130, 135) for the fastening of the motor, wherein at least one hole, one opening and/or one thread (130) is provided in the long first partial region of the ridge, and at least one hole, one opening and/or one thread (135) is provided in the short second partial region of the ridge.

2. Frame element according to Claim 1, **characterized in that** the frame element (100) is arranged in the lower region of the bicycle frame in such a manner that the component (110) of the frame element is oriented substantially upwards, and the ridge (120) is oriented substantially downwards, in particular in the direction of the carriageway.

3. Frame element according to Claim 1, **characterized in that** the frame element is arranged in the lower region of the bicycle frame in such a manner that the component (110) of the frame element is oriented downwards, in particular in the direction of the carriageway, and the ridge (120) is oriented upwards, in particular between the down-tube (140) and the seat tube (150).

4. Frame element according to one of the preceding claims, **characterized in that** the component (110) has a long first partial region and a short second partial region, wherein the first and the second partial regions are bent by an angle of 65° to 115°, in particular 105°, with respect to each other.

5. Frame element according to Claim 1 or 4, **characterized in that** the first and the second partial regions have a ratio of 1:2 to 1:2.5, in particular 1:2.4.

6. Frame element according to one of the preceding claims 1, 4 or 5, **characterized in that** the frame element, in particular the component (110) and/or the ridge (120), has an additional curvature at the end which is opposite the first partial region, wherein provision is made in particular for said curvature to have an angle of 150° to 170°, in particular 160°.

7. Frame element according to one of the preceding claims, **characterized in that** the thickness (112) of the components and the thickness (122) of the ridge have a ratio of 1:4 to 1:5, in particular 1:4.4.

8. Frame element according to one of the preceding claims, **characterized in that** the width (124) of the ridge and the width (114) of the components has a ratio of 1:1.6 to 1:1.9, preferably 1:1.7.

9. Frame element according to one of the preceding claims, **characterized in that** the frame element has an opening (190) passing through the ridge (120) and the component (110), wherein said opening is preferably provided between the connection of the components to the down-tube and to the seat tube.

10. Frame element according to one of the preceding claims, **characterized in that** the frame element is connected to the rear wheel fork (160), wherein provision is made in particular for the connection to take place via the second partial region of the components.

11. Frame element according to one of the preceding claims, **characterized in that** the frame element has a bearing point for the mounting of the rear wheel fork of the bicycle, wherein provision is made in particular for the bearing point to be designed as a pivot bearing and for the rear wheel fork to be mounted pivotably on the frame element.

12. Frame element according to one of the preceding claims, **characterized in that** the frame element (100) has a holder for the mudguard (180) of the rear wheel, wherein provision is made in particular for the mudguard to be connected to the curved short region of the components.

13. Motor (200) for driving a bicycle, for installation into a frame element according to one of Claims 1 to 12, with a motor unit (250) integrated in a motor housing (205) and with a drive shaft (240), which motor unit and drive shaft are arranged next to each other, wherein the drive shaft is configured in such a manner that it can exert a driving torque on a chain ring (260),
**characterized in that**
the motor housing (205) has a depression (210, 220, 230) for receiving a holding element which runs substantially along the entire length in the upper side and along a large portion of the lateral flank, and which very substantially corresponds in respect of the dimensions to those of the ridge (120) of the frame element (100).

14. Motor (200) according to Claim 13, **characterized in that** the motor housing (205) has at least one hole at the edge of the upper depression (220) and likewise has at least one hole at the edge of the lateral depression (230), for fastening the holding element.

15. Bicycle with a motor-assisted drive, **characterized in that** the bicycle has a motor according to either of Claims 13 and 14 and a frame element according to one of Claims 1 to 12, wherein the fastening of the motor to the frame element takes place by insertion of the ridge into the depression of the motor, wherein the retention of the motor is provided via holes, openings and/or threads (130, 135) in the ridge (120).

16. Bicycle with a motor-assisted drive according to Claim 15, **characterized in that** the motor is arranged above the frame element.

## Revendications

1. Élément de cadre pour une bicyclette, en particulier pour la fixation d'un moteur d'entraînement pour la bicyclette, l'élément de cadre (100)
- étant monté dans la région inférieure du cadre de bicyclette et
- étant connecté à un tube inférieur (140) et à un tube de selle (150) et
- présentant un composant courbe en forme de plaque (110) qui établit la liaison avec le tube inférieur (140) et le tube de selle (150), l'élément de cadre présentant, sur les composants courbes en forme de plaque (110), une crête (120) s'étendant essentiellement sur toute la longueur des composants (110) et faisant saillie centralement au-delà du composant (110),
**caractérisé en ce que**
la crête (120) présente une première région partielle longue et une deuxième région partielle courte, la première et la deuxième région partielle étant inclinées l'une par rapport à l'autre suivant un angle de 65° à 115°, en particulier de 105°,
la crête (120) présentant au moins deux trous, ouvertures, et/ou filetages latéraux (130, 135) pour la fixation du moteur, au moins un trou, une ouverture et/ou un filetage (130) étant prévus dans la première région partielle longue de la crête et un trou, une ouverture et/ou un filetage (135) étant prévus dans la deuxième région partielle courte de la crête.

2. Élément de cadre selon la revendication 1, **caractérisé en ce que** l'élément de cadre (100) est disposé dans la région inférieure du cadre de bicyclette de telle sorte que le composant (110) de l'élément de cadre soit orienté essentiellement vers le haut et que la crête (120) soit orientée essentiellement vers le bas, en particulier dans la direction de la route.

3. Élément de cadre selon la revendication 1, **caractérisé en ce que** l'élément de cadre est disposé dans la région inférieure du cadre de bicyclette de telle sorte que le composant (110) de l'élément de cadre soit orienté vers le bas, en particulier dans la direction de la route, et que la crête (120) soit orientée vers le haut, en particulier entre le tube intérieur (140) et le tube de selle (150).

4. Élément de cadre selon l'une quelconque des revendications précédentes, **caractérisé en ce que** le composant (110) présente une première région partielle longue et une deuxième région partielle courte, la première et la deuxième région partielle étant inclinées l'une par rapport à l'autre suivant un angle de 65° à 115°, en particulier de 105°.

5. Élément de cadre selon la revendication 1 ou 4, **caractérisé en ce que** la première et la deuxième région partielle présentent un rapport de 1:2 à 1:2,5, en particulier de 1:2,4.

6. Élément de cadre selon l'une quelconque des revendications précédentes 1, 4 ou 5, **caractérisé en ce que** l'élément de cadre, en particulier le composant (110) et/ou la crête (120), au niveau de l'extrémité opposée à la première région partielle, présente une courbure supplémentaire, cette courbure présentant notamment un angle de 150° à 170°, en particulier de 160°.

7. Élément de cadre selon l'une quelconque des revendications précédentes, **caractérisé en ce que** l'épaisseur (112) des composants et l'épaisseur (122) de la crête présentent un rapport de 1:4 à 1:5, en particulier de 1:4,4.

8. Élément de cadre selon l'une quelconque des revendications précédentes, **caractérisé en ce que** la largeur (124) de la crête et la largeur (114) des composants présentent un rapport de 1:1,6 à 1:1,9, de préférence de 1:1,7.

9. Élément de cadre selon l'une quelconque des revendications précédentes, **caractérisé en ce que** l'élément de cadre présente une ouverture (190) traversant la crête (120) et le composant (110), cette ouverture étant de préférence prévue entre la connexion des composants au tube inférieur et au tube de selle.

10. Élément de cadre selon l'une quelconque des revendications précédentes, **caractérisé en ce que** l'élément de cadre est connecté à la fourche de la roue arrière (160), la connexion s'effectuant notamment par le biais de la deuxième région partielle des composants.

11. Élément de cadre selon l'une quelconque des revendications précédentes, **caractérisé en ce que** l'élément de cadre présente un point de palier pour le support de la fourche de roue arrière de la bicyclette, le point de palier étant notamment réalisé sous forme de palier pivotant et **en ce que** la fourche de roue arrière est supportée de manière pivotante sur l'élément de cadre.

12. Élément de cadre selon l'une quelconque des revendications précédentes, **caractérisé en ce que** l'élément de cadre (100) présente une fixation pour la tôle de protection (180) de la roue arrière, la tôle de protection étant notamment connectée à la région courbe courte des composants.

13. Moteur (200) pour l'entraînement d'une bicyclette, destiné à être intégré dans un élément de cadre selon l'une quelconque des revendications 1 à 12, comprenant une unité de moteur (250) intégrée dans un boîtier de moteur (205) et un arbre d'entraînement (240) qui sont disposés l'un à côté de l'autre, l'arbre d'entraînement étant configuré de telle sorte qu'il puisse exercer un couple d'entraînement sur un grand pignon (260),
**caractérisé en ce que**
le boîtier de moteur (205) présente un renfoncement (210, 220, 230) pour recevoir un élément de retenue, qui s'étend essentiellement le long de toute la longueur dans le côté supérieur et le long de la majeure partie du flanc latéral et qui coïncide essentiellement, en termes de dimensions, avec celles de la crête (120) de l'élément de cadre (100).

14. Moteur (200) selon la revendication 13,
**caractérisé en ce que** le boîtier de moteur (205) présente, au bord du renfoncement supérieur (220), au moins un trou, et au bord du renfoncement latéral (230) également au moins un trou, pour la fixation de l'élément de retenue.

15. Bicyclette à entraînement assisté par moteur,
**caractérisée en ce que** la bicyclette présente un moteur selon l'une quelconque des revendications 13 ou 14 et un élément de cadre selon l'une quelconque des revendications 1 à 12, la fixation du moteur à l'élément de cadre s'effectuant par le biais de l'insertion de la crête dans le renfoncement du moteur, la fixation du moteur étant assurée par le biais de trous, d'ouvertures et/ou de filetages (130, 135) dans la crête (120).

16. Bicyclette à entraînement assisté par moteur selon la revendication 15, **caractérisée en ce que** le moteur est disposé au-dessus de l'élément de cadre.
